# EUROPÄISCHE PATENTSCHRIFT

(11) **EP 3 660 447 B1**
(45) Veröffentlichungstag und Bekanntmachung des Hinweises auf die Patenterteilung: **30.03.2022**
(21) Anmeldenummer: 19199729.5
(22) Anmeldetag: 26.09.2019
(51) Int. Cl.: G01B 11/03, G01B 11/08, G01B 11/24, G01S 17/66, G01S 17/88, B61L 23/04, B66C 7/02, B66C 9/16, B61K 9/00, A63G 7/00, E01B 35/06, G01C 7/04

(54) **VERFAHREN ZUR BESTIMMUNG EINER TRÄGERGEOMETRIE EINES TRÄGERS UND MESSSYSTEM**
METHOD FOR DETERMINING A SUPPORT GEOMETRY OF A SUPPORT AND MEASURING SYSTEM
PROCÉDÉ DE DÉTERMINATION D'UNE GÉOMÉTRIE D'UN SUPPORT ET SYSTÈME DE MESURE

(30) Priorität: 30.11.2018 DE 102018130530
(43) Veröffentlichungstag der Anmeldung: 03.06.2020
(73) Patentinhaber: Mack Rides GmbH & Co. KG, 79183 Waldkirch (DE)
(72) Erfinder: Schill, Hubert, 79215 Elzach (DE); Briggl, Dominik, 79108 Freiburg (DE)
(74) Vertreter: Westphal, Mussgnug & Partner Patentanwälte mbB

(56) Entgegenhaltungen:
- CN-B- 103 115 581
- KR-A- 20140 131 183
- US-A1- 2007 171 434
- US-A1- 2012 224 056
- US-A1- 2017 205 227

## Beschreibung

Die vorliegende Erfindung betrifft ein Verfahren zur Bestimmung einer Trägergeometrie eines Trägers, insbesondere einer Schiene oder eines Rohrs mittels einer Messvorrichtung mit einem Trackersteuerungssensor und einem Lasertracker mit den Merkmalen des Patentanspruchs 1 und ein Messsystem mit den Merkmalen des Patentanspruchs 9.

Aus dem Stand der Technik sind Verfahren zur Vermessung eines Trägers sowie Messsysteme und Messvorrichtungen hierzu in unterschiedlichen Ausgestaltungen vorbekannt. Derartige Verfahren und Messsysteme kommen immer dann zur Anwendung, wenn eine Trägergeometrie eines gebogenen Trägers, insbesondere die Geometrie eines gebogenen Rohrs, unbekannt ist und erfasst werden soll. Insbesondere das Biegen von Trägern ist eine hoch komplexe Aufgabe und erfordert Erfahrungswerte, um durch das Aufbringen einer Biegekraft dem Träger in einem sogenannten Biegevorgang eine exakte und vorgegebene Trägergeometrie zu geben. Nach dem Biegevorgang wird die Trägergeometrie überprüft und der Biegevorgang beliebig oft wiederholt, bis der Träger die vorgegebene und gewünschte Trägergeometrie aufweist. Derartige gebogene Träger, insbesondere Rohre werden bevorzugt für die Konstruktion von schienengeführten Fahrgeschäften z.B. Achterbahnen, verwendet, wobei der durch die Träger gebildete Schienenverlauf exakt einem geplanten und vorgegebenen Schienenverlauf folgen muss. Um nach dem Biegevorgang die Trägergeometrie absolutgenau zu vermessen, gibt es in dem Stand der Technik optische Messgeräte, die beispielsweise kamerabasiert die Trägergeometrie erfassen. Derartige Kameramesssysteme werden beispielsweise von der Firma AICON angeboten.

Weiterer Stand der Technik bilden die Druckschriften US 2012 /224 056 A1, US 2017 / 205 227 A1, US 2007 / 171 434 A1, KR 2014 0 131 183 A und CN 103 115 581 B. Nachteilig an diesem Stand der Technik ist, dass die oben erwähnten kamerabasierten Messgeräte nicht für die Vermessung von großen Trägern verwendet werden können, wie sie beispielsweise in der Konstruktion von Schienenverläufen in Fahrgeschäften z.B. bei Achterbahnen oder dergleichen verwendet werden. Auch hat es sich als nachteilig erwiesen, dass die aus dem Stand der Technik bekannten Messgeräte für den stationären Einsatz unter Beschränkung der Bauteilgröße nicht für den halbstationären Einsatz geeignet sind und nur äußerst aufwendig zu transportieren sind. Diese Messgeräte müssen vor der Verwendung exakt kalibriert werden, um absolutgenau die Geometrie der Träger berechnen zu können. Daher wurden in der Vergangenheit für die Bestimmung von Trägergeometrien großer Bauteile spezialisierte Messunternehmen mit der Vermessung beauftragt, was wiederum mit erheblichen Kosten verbunden war. Auch hat es sich als nachteilig erwiesen, dass man den zu vermessenden Träger in einer vorgegebenen Ausrichtung relativ zu dem Messgerät positionieren muss, um hinreichend genaue Messergebnisse zu erhalten.

Es ist daher die Aufgabe der vorliegenden Erfindung, die aus dem Stand der Technik bekannten Verfahren zur Bestimmung einer Trägergeometrie eines Trägers in zweckmäßigerweise zu verbessern und ein verbessertes Verfahren zur Bestimmung einer Trägergeometrie eines Trägers vorzuschlagen, welches ermöglicht, einen Träger, insbesondere ein Rohr, absolutgenau zu vermessen. Der Messvorgang soll von einem Bedienpersonal ohne Engineering-Know-how innerhalb kürzester Zeit durchgeführt werden können und die Trägergeometrie soll sowohl unabhängig von der Lage des Trägers als auch unabhängig von der Kenntnis einer Soll-Trägergeometrie des Trägers erfasst werden können. Diese Aufgaben werden erfindungsgemäß durch ein Verfahren mit den Merkmalen des Patentanspruchs 1 und einem Messsystem mit den Merkmalen des Patentanspruchs 9 gelöst.

Weitere vorteilhafte Ausgestaltungen der Erfindung werden in den Unteransprüchen angegeben.

Das erfindungsgemäße Verfahren zur Bestimmung einer Trägergeometrie eines Trägers, insbesondere einer Schiene oder eines Rohrs, erfolgt mittels einer Messvorrichtung mit einem Trackersteuerungssensor und einem Lasertracker, wobei der Lasertracker beabstandet und ortsfest zu der Messvorrichtung angeordnet ist und der Lasertracker optisch mit dem Trackersteuerungssensor gekoppelt ist. Der Lasertracker ist bevorzugt ein laserbasiertes Koordinatenmesssystem und kann beispielsweise ein AT960 der Firma LEICA sein. Der AT960 ist ein leicht zu transportierender und nach nur wenigen Minuten beinahe in jeder Umgebung betriebsbereiter Lasertracker, der ein dynamisches Messen zusammen mit einem Trackersteuerungssensor, beispielsweise einem Leica T-Mac (Tracker-Machine Control Sensor) ermöglicht. Ein solches Messsystem kann ein Messvolumen von bis zu 30 m erreichen und eine Messgenauigkeit von bis zu 60 µm bei einem Messvolumen von 15 m.

Das erfindungsgemäße Verfahren zeichnet sich dadurch aus, dass in einem ersten Verfahrensschritt die Messvorrichtung mit dem Trackersteuerungssensor auf den zu vermessenden Träger aufgesetzt wird. In einem folgenden zweiten Verfahrensschritt wird der Träger durch ein Abfahren des Trägers entlang der Längsachse des Trägers mit der Messvorrichtung vermessen, wobei eine Mehrzahl von Messpunkten mit sechs Freiheitsgraden erfasst wird. Unter den sechs Freiheitsgraden werden sowohl die Raumkoordinaten (x, y, z) als auch die Eulerwinkel (α, β, γ) subsummiert, wodurch die exakte Lage der Messvorrichtung in dem Messvolumen an dem jeweiligen Messpunkt bestimmt werden kann. Mittels der erfassten Messpunkte kann in einem letzten Verfahrensschritt eine Kurve angegeben werden, durch welche die Trägergeometrie des Trägers beschrieben werden kann. Unter einem Träger kann im Kontext dieser Erfindung ein ein- oder mehrstückiger Körper oder Balken verstanden werden, der senkrecht zu seiner Längsachse eine geometrisch definierte Trägerform aufweist, beispielsweise einen quadratischen, runden oder rechteckigen Querschnitt oder herkömmliche Profilformen, beispielsweise ein I-, T-, C-, Z-Profil. Im Verhältnis zu der Höhe des Querschnitts weisen die Träger eine große Länge in der Längsachse auf. Unter einem Träger kann auch eine Schienenkonstruktion und/oder Fachwerkskonstruktion verstanden werden.

Erfindungsgemäß bei dem vorliegenden Verfahren ist es, wenn die Messvorrichtung mindestens einen Sensor aufweist, der die korrekte Positionierung der Messvorrichtung auf dem Träger erfasst. Bevorzugt werden nur dann Messpositionen erfasst, wenn durch den mindestens einen Sensor die korrekte Positionierung auf dem Träger festgestellt ist. Wenn ein Bedienpersonal zur Bestimmung der Trägergeometrie des Trägers den Träger mit der Messvorrichtung abfährt, werden keine fehlerbehafteten Messpositionen erfasst. Der Sensor erkennt beispielsweise ein unbeabsichtigtes Abheben der Messvorrichtung von dem Träger und die Erfassung von Messpositionen wird unterbrochen. Dadurch werden die Qualität der Messergebnisse und die Qualität der berechneten Trägergeometrie verbessert.

Darüber hinaus hat es sich als vorteilhaft erwiesen, wenn die Berechnung der Trägergeometrie anhand der Mehrzahl von Messpositionen einerseits und zusätzlich mit mindestens einem weiteren Parameter erfolgt, wobei der mindestens eine Parameter für eine Trägerform des Trägers charakteristisch ist. Beispielsweise kann dieser Parameter den Abstand von einem Referenzpunkt, welcher der erfassten Messposition entspricht, zu dem Masseschwerpunkt beschreiben, also beispielsweise den Radius eines Rohrs oder die halbe Profilhöhe eines I-Profils. Anhand dieses Parameters und der Mehrzahl von Messpositionen kann nicht nur eine Kurve angegeben werden, durch welche die Trägergeometrie , sondern auch eine Trägermittellinie berechnet werden, die der Längsachse des Trägers, also der Kurve, welche im Massenschwerpunkt des Trägers verläuft, entspricht. Besonders vorteilhaft ist es, wenn der mindestens eine Parameter ein Durchmesser oder eine Profilform ist, und wenn der Parameter manuell erfasst wird. Typischerweise werden Träger mit bekannten Trägerformen vermessen, wodurch zur Berechnung der Trägergeometrie bzw. der Trägermittellinie oder bzw. der Längsachse des Trägers der Durchmesser oder die Profilform manuell, beispielsweise durch Eingabe bereitgestellt werden kann.

Weiterhin ist es besonders vorteilhaft, wenn der mindestens eine Parameter mittels mindestens zwei Messpositionen berechnet wird, wobei die Messvorrichtung zwischen den mindestens zwei Messpositionen um einen Polarwinkel um die Längsachse des Trägers verschoben wird. Beispielsweise werden mindestens zwei Messpositionen benötigt, um den Mittelpunkt und/oder den Durchmesser des Rohres zu bestimmen. Der Mittelpunkt eines Rohrs befindet sich auf der Trägermittellinie bzw. der Längsachse des Trägers. Diese beiden Messpositionen liegen im Wesentlichen in einer Ebene, die um einen Polarwinkel 0≤ ϕ ≤ 180 um die Längsachse verschoben sind. Bevorzugt werden für die Berechnung mindestens drei Messpositionen verwendet, die im Wesentlichen in einer Ebene senkrecht zu der Längsachse des Trägers angeordnet sind und in unterschiedlichen Polarwinkeln zu der Längsachse erfasst werden.

Gemäß einer weiteren vorteilhaften Ausgestaltung der vorliegenden Erfindung wird die Messvorrichtung mittels einer Längsführung parallel zu der Längsachse an dem Träger geführt. Die Längsführung kann bevorzugt den Träger bereichsweise umgreifen, wodurch die Messvorrichtung in einer Ebene senkrecht zu der Längsachse an dem Träger besonders bevorzugt zentriert abgestützt ist.

Nach Maßgabe einer weiteren bevorzugten Ausgestaltung kann es bei der Durchführung des erfindungsgemäßen Verfahrens von Vorteil sein, wenn die Messvorrichtung entlang der Längsachse des Trägers von einem Bedienpersonal geführt wird oder wenn die Messvorrichtung zur Vermessung des Trägers den Träger entlang der Längsachse mechanisch angetrieben abfährt. Die Messvorrichtung kann beispielsweise mittelbar und/oder unmittelbar mit einem Roboter über den Träger gezogen werden. Besonderes bevorzugt ist der Roboter mittelbar, beispielsweise durch ein Seil oder dergleichen mit der Messvorrichtung gekoppelt, wodurch ein möglicher Weise notwendiges Einlernen oder Programmieren des Roboters auf ein Minimum reduziert wird. Auch könnte die Messvorrichtung einen Eigenantrieb aufweisen, durch den die Messvorrichtung wie ein ferngesteuertes Auto den Träger abfahren könnte. Insbesondere die Handführung der Messvorrichtung entlang der Längsachse des Trägers ist besonders einfach zu realisieren und flexibel einzusetzen, da die Vermessung des Trägers auch dann erfolgen kann, wenn die Trägergeometrie nicht bekannt ist. Ein Einlernen eines mechanischen Antriebs, beispielsweise eines Roboters, ist nicht nötig.

Es hat sich als vorteilhaft erwiesen, wenn die Messpositionen zeitlich getriggert oder abstandsgetriggert erfasst werden. Die zeitliche Triggerung kann in einer konstanten oder variablen Rate von bis zu 1000 Messpositionen pro Sekunde, also 1000Hz erfolgen. Bei der Abstandstriggerung werden Messpositionen nur dann aufgenommen, wenn der Abstand Δx, Δy, und/oder Δz zwischen zwei Messpositionen einen vorgegebenen Wert überschreitet, wobei Δx, Δy, und/oder Δz einer gewünschten Messauflösung beispielweise 0,1mm oder 1mm entsprechen können. Besonders bevorzugt ist es, wenn die Messvorrichtung durch mindestens ein Haltemittel an dem Träger gehalten wird. Das mindestens eine Haltemittel kann beispielsweise ein mechanisches Haltemittel sein, dass die Messvorrichtung mit einer einstellbaren Haltekraft an dem Träger hält, wodurch ein unbeabsichtigtes Abheben der Messvorrichtung von dem Träger verhindert werden kann. Auch kann das Haltemittel ein magnetisches Haltemittel sein, welches, unter der Maßgabe, dass der Träger aus einem magnetischen Werkstoff hergestellt ist, die Messvorrichtung mit einer konstanten magnetischen Kraft an dem Träger halten und ein unbeabsichtigtes Lösen oder Abheben der Messvorrichtung von dem Träger vermeiden kann.

Darüber hinaus betrifft die vorliegende Erfindung ein Messsystem, aufweisend einen Lasertracker und eine Messvorrichtung mit einem Trackersteuerungssensor. zur Durchführung eines Verfahrens zur Bestimmung der Trägergeometrie eines Trägers. Die Messvorrichtung umfasst eine Plattform mit einer ersten Seite, einer zweiten Seite und eine Längsachse. Die erste Seite ist auf der dem Träger zugewandten Seite angeordnet, währenddessen die zweite Seite auf der von dem Träger abgewandten Seite angeordnet ist. Auf der zweiten Seite kann der Trackersteuerungssensor angeordnet sein. Auf der ersten Seite der Plattform ist eine Längsführung angeordnet, die parallel zu der Längsachse ausgebildet ist, wobei die Längsführung in der Längsachse in zwei parallelen und beabstandeten Ebenen jeweils mindestens zwei Laufflächen aufweist und wobei die Laufflächen ausgebildet sind, die Messvorrichtung in einer Ebene senkrecht zu einer Längsachse an dem Träger abzustützen. Durch die Längsführung kann die Messvorrichtung durch das Bedienpersonal ausgerichtet zu der Längsachse entlang der Längsachse des Trägers geführt bewegt werden.

Weiterhin ist es erfindungsgemäß, wenn auf der zweiten Seite Befestigungsmittel vorgesehen sind, die eingerichtet sind, einen Trackersteuerungssensor auf der Plattform zu befestigen. Der Trackersteuerungssensor kann besonders bevorzugt mittels löslicher Befestigungsmittel an der Messvorrichtung angeordnet sein, wodurch der kostenintensive Trackersteuerungssensor für unterschiedlich ausgestaltete Messvorrichtungen verwendet werden kann.

Erfindungsgemäß ist es auch, wenn die Messvorrichtung mindestens einen Sensor aufweist, der die korrekte Positionierung der Messvorrichtung auf dem Träger erfasst. Die Messpositionen werden nur erfasst, wenn durch den mindestens einen Sensor die korrekte Positionierung auf dem Träger festgestellt ist. Wenn ein Bedienpersonal zur Bestimmung der Trägergeometrie des Trägers den Träger mit der Messvorrichtung abfährt, werden keine fehlerbehafteten Messpositionen erfasst. Der Sensor erkennt beispielsweise ein unbeabsichtigtes Abheben der Messvorrichtung von dem Träger und die Erfassung von Messpositionen wird unterbrochen. Dadurch werden die Qualität der Messergebnisse und die Qualität der berechneten Trägergeometrie verbessert.

Weiterhin hat es sich als vorteilhaft erwiesen, wenn die Längsführung einen ersten Haltebügel und einen zweiten Haltebügel umfasst, und wenn der erste Haltebügel und der zweite Haltebügel jeweils einen zylinderförmigen Teilkreis einschließen. Der zylinderförmige Teilkreis bildet einen Aufnahmebereich, in den der Träger beim Durchführen des erfindungsgemäßen Verfahrens bereichsweise ragt und durch die beiden Haltebügel bereichsweise umgriffen werden kann.

Es ist vorteilhaft, wenn der erste und/oder zweite Haltebügel einen Winkel von 90°± 60° einschließen, bzw. einschließt. Besonders bevorzugt ist, wenn die Haltebügel einen Winkel von 90° einschließen. Eine derartige Anordnung der Haltebügel ermöglicht einen kompakten Aufbau der Messvorrichtung bei gleichzeitiger guter und sicherer Abstützung der Messvorrichtung an dem zu vermessenden Träger.

Insbesondere hat es sich als vorteilhaft erwiesen, wenn an einem ersten Ende und an einem zweiten Ende des jeweiligen Haltebügels die Lauffläche angeordnet ist, wodurch der Abstand zwischen den beiden Laufflächen möglichst groß gewählt ist, um einen sicheren Halt der Messvorrichtung an dem Träger zu gewährleisten.

Nach Maßgabe einer weiteren vorteilhaften Ausgestaltung der Messvorrichtung kann es vorteilhaft sein, wenn die Lauffläche eine Laufrolle und/oder einen Gleiter umfasst. Durch eine derart ausgestaltete Lauffläche kann die Messvorrichtung mit einem geringen Widerstand entlang der Längsachse über eine Oberfläche des Trägers geschoben werden.

Gemäß einer besonders bevorzugten Ausgestaltung der vorliegenden Erfindung weist die Messvorrichtung mindestens ein Haltemittel auf, welches eingerichtet ist, die Messvorrichtung an dem zu vermessenden Träger zu halten. Das Haltemittel ist weiter bevorzugt derart ausgebildet, dass eine konstante Haltekraft aufgebracht werden kann, mit der die Messvorrichtung an dem Träger gehalten wird. Besonders bevorzugt ist es, wenn das mindestens eine Haltemittel, unter der Maßgabe, dass der zu vermessende Träger aus einem magnetischen Werkstoff hergestellt ist, mindestens einen Magneten umfasst.

Insbesondere ist es bevorzugt, wenn der mindestens eine Magnet auf der ersten Seite der Plattform derart angeordnet ist, dass dieser stets beabstandet zu dem zu vermessenden Träger angeordnet ist. Weiterhin ist es bevorzugt, wenn die Plattform aus einem nicht magnetischen Werkstoff hergestellt ist und der mindestens eine Magnet von der ersten Seite absteht. Angezogene Späne, Metallsplitter oder sonstige Verunreinigungen können - ohne dass es zu einer Beeinflussung der Messergebnisse kommt - zwischen der Messvorrichtung und dem Träger durchtauchen.

Auch betrifft die vorliegende Erfindung die Verwendung eines solchen Messsystems beim Biegen von Trägern, insbesondere Rohren oder Schienensegmenten bis zu einer Länge von 50 m. Besonders bevorzugt ist die Länge der Träger nicht mehr als 25 m, vorzugsweise 15 m noch weiter bevorzugt 10 m. Die Träger sind jedoch bevorzugt nicht kürzer als 2 m, noch mehr bevorzugt nicht kürzer als 5 m. Insbesondere betrifft die vorliegende Erfindung die Verwendung des Messsystems beim Biegen von Träger, insbesondere Rohren, wobei durch das Bestimmen der Trägergeometrie bzw. Rohrgeometrie, die beim Biegevorgang zu erzielende Trägergeometrie überprüft wird.

Nachfolgend werden unter Bezugnahme auf die begleitenden Zeichnungen das erfindungsgemäße Verfahren zur Bestimmung der Trägergeometrie eines Trägers sowie ein exemplarisches Ausführungsbeispiel für eine erfindungsgemäße Messvorrichtung und das Messsystem im Detail beschrieben. Es zeigen:
- Figur 1: einen Messaufbau des erfindungsgemäßen Messsystems, aufweisend einen Lasertracker und eine Messvorrichtung mit einem Trackersteuerungssensor,
- Figur 2: eine vergrößerte perspektivische Darstellung des Messsystems gemäß Figur 1,
- Figur 3: eine vergrößerte perspektivische Darstellung der Messvorrichtung mit dem Trackersteuerungssensor, die auf einem zu vermessenden Träger, der als Rohr ausgebildet ist, angeordnet ist, und
- Figur 4: eine Frontansicht der Messvorrichtung mit dem Trackersteuerungssensor.

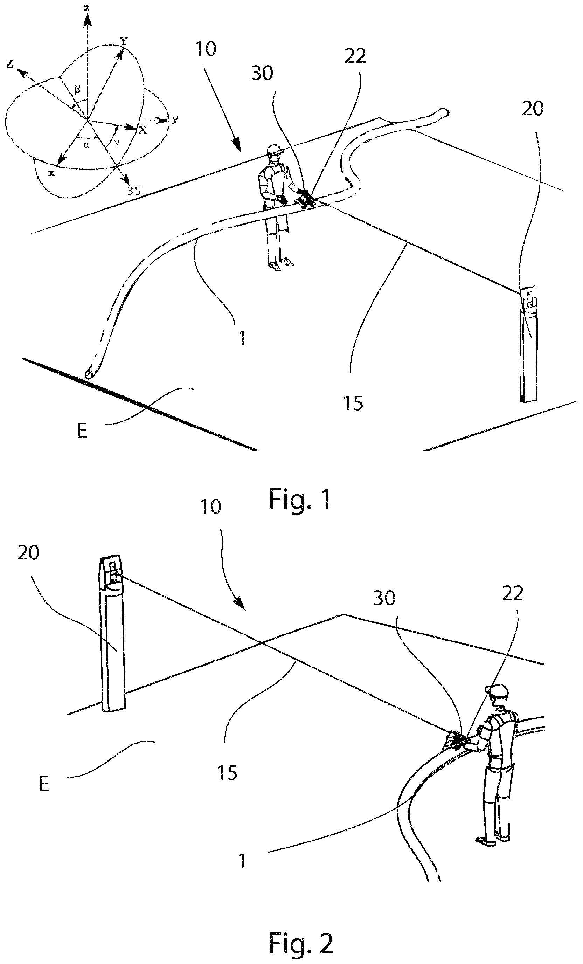

Figur 1 zeigt eine perspektivische Darstellung des Messaufbaus des erfindungsgemäßen Messsystems 10 zur Bestimmung einer Trägergeometrie eines Trägers 1. Das Messsystem 10 umfasst einen Lasertracker 20 und eine Messvorrichtung 30 mit einem Trackersteuerungssensor 22.

Der Lasertracker 20 kann einen aus dem Stand der Technik bekannten Lasertracker 20 vom Typ "Leica Absolute Tracker AT960" umfassen, der auf einem Sockel ortsfest, beispielsweise auf einer Nullebene E, angeordnet ist. Der Trackersteuerungssensor 22 kann ebenfalls ein aus dem Stand der Technik bekannter Sensor "Leica T-Mac" sein. Der Trackersteuerungssensor 22 ist auf einer weiter unten im Detail erläuterten Messvorrichtung 30 mittels Befestigungsmittel 46 lösbar angeordnet und ist optisch mit dem Lasertracker 20 gekoppelt, welches in den Figuren 1 und 2 exemplarisch mittels eines Laserstrahls 15 dargestellt ist.

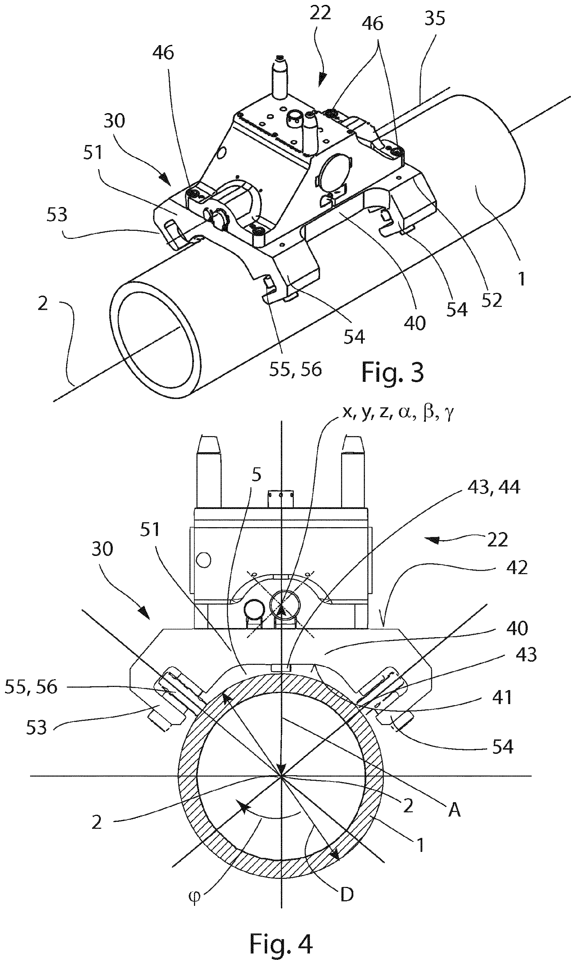

Der vergrößerten Darstellung der Messvorrichtung 30 in den Figuren 3 und 4 ist zu entnehmen, dass die Messvorrichtung 30 eine Plattform 40 umfasst. Die Plattform 40 kann aus einem nicht magnetischen Werkstoff, beispielsweise Aluminium, hergestellt sein und weist eine erste Seite 41, eine zweite Seite 42 und eine Längsachse 35 auf, wobei die erste Seite 41 der dem Träger 1 zugewandten Seite entspricht und die zweite Seite 42 auf der von dem Träger 1 abgewandten Seite angeordnet ist, auf der ebenso der Trackersteuerungssensor 22 angeordnet ist.

Weiterhin ist auf der ersten Seite 41 der Plattform 40 eine Längsführung 34 ausgebildet, welche eingerichtet ist, die Messvorrichtung 30 parallel zu einer Längsachse 2 des Trägers 1 zu führen, insbesondere zentriert zu führen. Die Längsführung 34 umfasst zwei Haltebügel 51, 52, welche senkrecht zu der Längsachse 35 in zwei parallelen und beabstandeten Ebenen angeordnet sind. Die zwei Haltebügel 51, 52 sind bevorzugt an den gegenüberliegenden Enden der Plattform 40 angeordnet. Die Haltebügel 51, 52 weisen jeweils ein erstes Ende 53 und ein zweites Ende 54 auf, wobei das erste Ende 53 und das zweite Ende 54 von der ersten Seite 41 der Plattform 40 abstehen und einen Aufnahmebereich 5 umschließen, in welchen der zu vermessende Träger 1 hineinragen kann. Das erste Ende 53 und das zweite Ende 54 können den Träger 1 somit bereichsweise umgreifen. Die Form des Aufnahmebereichs 5 und des Trägers 1 korrespondieren bevorzugt.

Weiterhin umfassen die Haltebügel 51, 52 jeweils an ihrem abstehenden ersten Ende 53 und zweiten Ende 54 eine Lauffläche 55, die eingerichtet ist, die Messvorrichtung 30 auf dem Träger 1 zentriert abzustützen. Die jeweilige Lauffläche 55 kann beispielsweise einen Gleiter oder - wie dargestellt - eine Laufrolle 56 umfassen, wodurch die Messvorrichtung 30 leichtgängig und zentriert entlang der Längsachse 2 des Trägers 1 verschoben werden kann.

In dem dargestellten Ausführungsbeispiel schließen die beiden von der Plattform 40 abstehenden Enden 53, 54 der Haltebügel 51, 52 einen Winkel von 90° ein.

Der Frontansicht gemäß Figur 4 kann entnommen werden, dass auf der ersten Seite 41 der Plattform ein Haltemittel 43 angeordnet ist, durch welches die Messvorrichtung 30 mittels einer Haltekraft an dem Träger 1 gehalten ist. Das Haltemittel 43 ist im dargestellten Ausführungsbeispiel ein Magnet 44, der besonders bevorzugt mittig zwischen den beiden abstehenden Enden 53, 54 auf der ersten Seite 41 der Plattform 40 und von dieser geringfügig abstehend angeordnet ist. Der Magnet 44 kann bevorzugt ein Magnetstreifen sein, der sich entlang der Längsachse 35 der Messvorrichtung 30 erstreckt und bevorzugt derart angeordnet ist, dass bei der Vermessung eines Trägers 1 ein geringer Luftspalt zwischen dem Magnet 44 und dem Träger 1 ausgebildet ist, wodurch ein starkes permanentmagnetisches Anhaften des Magneten 44 bzw. der Messvorrichtung 30 an dem Träger 1 verhindert ist. Darüber hinaus sollte ein ausreichender Spalt zwischen dem Träger 1 und der Plattform 40 vorgesehen sein, wodurch sichergestellt ist, dass keine Verunreinigungen beim Abfahren der Längsachse 2 des Trägers 1 zu einem Abheben der Messvorrichtung 30 von dem Träger 1 führen.

Weiterhin umfasst die Messvorrichtung 30 einen (nicht dargestellten) Sensor , der die korrekte Positionierung der Messvorrichtung 30 auf dem Träger 1 erfasst. Der Sensor kann beispielsweise ein optischer Sensor sein, der das Vorhandensein des Trägers 1 innerhalb des Aufnahmebereichs 5 erfasst, oder ein induktiver Näherungssensor. Weiterhin wird der Sensor die ordnungsgemäße Kontaktierung der Laufflächen 55 auf dem Träger 1 erfassen und sicherstellen, dass keine Messung durchgeführt wird, wenn die Messvorrichtung 30 nicht ordnungsgemäß auf dem Träger 1 positioniert ist.

Der Trackersteuerungssensor 22 muss optisch mit dem Lasertracker 20 gekoppelt sein, wobei der Lasertracker 20 den Trackersteuerungssensor 22 verfolgt und so die Position des Trackersteuerungssensors 22 durch optische Verfahren bestimmen kann. Für jede der Positionen kann sowohl eine Raumkoordinate x, y, z als auch die Eulerwinkel α, β, γ des Trackersteuerungssensors 22 bzw. der Messvorrichtung 30 ermittelt werden, wobei diese Werte nachfolgend als Messpositionen bezeichnet werden. In Figur 1 sind zum besseren Verständnis die Raumkoordinaten x, y, z der Messvorrichtung 30 sowie die Eulerwinkel α, β, γ exemplarisch dargestellt, wobei die Messpositionen nicht zwangsweise in einem absoluten Koordinatensystem (X, Y , Z) bestimmt werden müssen, sondern lediglich in einem zu dem Lasertracker 20 relativ angeordneten Koordinatensystem. Die Eulerwinkel α, β, γ werden auf eine Längsachse 35 der Messvorrichtung bezogen.

Die Messpositionen können entweder zeitlich getriggert und/oder abstandsabhängig getriggert erfasst werden, wobei typischerweise die Messpositionen in einer Rate zwischen 1Hz und 1000Hz zeitlich getriggert erfasst werden können. Alternativ können bei der abstandsabhängigen Triggerung Messpositionen nur dann aufgenommen werden, wenn der Abstand Δx, Δy, und/oder Δz zwischen zwei Messpositionen einen vorgegebenen Wert überschreitet, wobei Δx, Δy, und/oder Δz einer gewünschten Messauflösung entsprechen können. Eine solche Messauflösung kann beispielsweise 0,1mm oder 1mm sein.

Das erfindungsgemäße Verfahren zur Bestimmung der Trägergeometrie des Trägers 1 soll besonders - so wie in den Figuren 1 und 2 dargestellt ist - von einem Bedienpersonal ohne Engineering-Know-how durchgeführt werden können. Bei einer manuellen Durchführung des Verfahrens zur Bestimmung der Trägergeometrie des Trägers 1 durch das Bedienpersonal kann die Trägergeometrie direkt ermittelt werden, ohne dass eine solche Geometrie des Trägers 1 bekannt ist. Daher ist das erfindungsgemäße Verfahren besonders flexibel und mobil einsetzbar und kann nicht nur innerhalb der Fertigungsräumlichkeiten z.B. vor, während oder nach einem Biegevorgang verwendet werden, sondern ebenfalls direkt an einer Baustelle. Dort kann die Lage des Trägers 1 ermittelt oder die Trägergeometrie von fremdgefertigten Trägern 1 überprüft werden. Selbst bei besonders langen Trägern mit einer Länge von ca. 10m dauert das Verfahren zur Bestimmung der Trägergeometrie des Trägers 1 nicht länger als 20-30 Sekunden.

Hierzu setzt das Bedienpersonal zunächst die Messvorrichtung 30 auf den Träger 1 auf und zwar derart, dass die beiden Haltebügel 51, 52 den sich in dem Aufnahmebereich 5 befindlichen Träger 1 bereichsweise umgreifen und die Laufflächen 55 die Messvorrichtung 1 der Art auf dem Träger 1 abstützen, dass die Messvorrichtung 1 bevorzugt leichtgängig entlang der Längsachse 2 des Trägers 1 verschoben werden kann.

Anschließend schiebt das Bedienpersonal die Messvorrichtung 30 entlang der Längsachse 2 des Trägers 1, wobei eine Mehrzahl von Messpositionen entlang der Längsachse 2 des Trägers 1 erfasst werden. Nach dem Abfahren des Trägers 1 kann die Trägergeometrie anhand der Mehrzahl von Messpositionen berechnet werden, wobei typischerweise mindestens ein weiterer Parameter A benötigt wird, um von der Mehrzahl von Messpositionen auf die Lage einer Trägermittellinie, welche der Längsachse 2 des Trägers 1 entspricht, zu schließen. Dieser mindestens eine Parameter A entspricht dabei einem Wert, der für die Trägerform charakteristisch ist.

Erfindungsgemäß kann der Träger 1 eine senkrecht zu der Längsachse ausgebildete Trägerform aufweisen, welche im dargestellten Ausführungsbeispiel ein kreisrundes Rohr ist. Es versteht sich von selbst, dass der Träger 1 eine beliebige Form aufweisen kann, also auch die Form eines mehreckigen Profils, beispielsweise eines C-, I-, T- oder Z-Profils. Auch kann der Träger 1 ein Schienensegment oder ein Fachwerkträger sein.

In dem dargestellten Ausführungsbeispiel kann zur Berechnung der Lage der Trägermittellinie der Parameter A, der einem Radius oder einem Durchmesser D des Rohrs entspricht, entweder zur Berechnung manuell angegeben werden oder durch mindestens zwei Messungen an mindestens zwei Messpositionen berechnet werden. Diese mindestens zwei Messpositionen sind in einer Ebene senkrecht zu der Längsachse 2 des Trägers 1 um einen Polarwinkel ϕ verdreht angeordnet, wobei typischer Weise nicht nur zwei Messpositionen erfasst werden, sondern der Träger 1 in einem Abschnitt zweimal in unterschiedlichen Polarwinkeln ϕ abgefahren wird und anhand eines Überlappungsbereiches der Parameter A bestimmt wird.

Der Sensor an der Messvorrichtung 30 steuert die Erfassung von Messpositionen. Der Sensor kontrolliert das Erfassen von Messpositionen, wodurch nur dann Messpositionen erfasst werden, wenn der Sensor eine ordnungsgemäße Positionierung der Messvorrichtung 30 auf dem Träger 1 feststellt. Auch kann der Sensor ein versehentliches Abheben der Messvorrichtung 30 von dem Träger 1 erfassen, wodurch die Erfassung von Messpositionen unterbrochen wird und fehlerhafte Messergebnisse vermieden werden.

### Bezugszeichenliste

- 1: Träger
- 2: Längsachse
- 5: Aufnahmebereich
- 10: Messsystem
- 15: Laserstrahl
- 20: Lasertracker
- 22: Trackersteuerungssensor
- 30: Messvorrichtung
- 34: Längsführung
- 35: Längsachse
- 40: Plattform
- 41: erste Seite
- 42: zweite Seite
- 43: Haltemittel
- 44: Magnet
- 46: Befestigungsmittel
- 51: erster Haltebügel
- 52: zweiter Haltebügel
- 53: erstes Ende
- 54: zweites Ende
- 55: Lauffläche
- 56: Laufrolle

## Patentansprüche

1. Verfahren zur Vermessung einer Trägergeometrie eines Trägers (1), insbesondere einer Schiene oder eines Rohrs, mittels einer Messvorrichtung (30) mit einem Trackersteuerungssensor (22) und mittels eines Lasertrackers (20),
wobei der Lasertracker (20) beabstandet und ortsfest zur der Messvorrichtung (30) angeordnet ist und der Lasertracker (20) optisch mit dem Trackersteuerungssensor (22) gekoppelt ist, **gekennzeichnet durch** die Verfahrensschritte:
- Aufsetzen der Messvorrichtung (30) auf den Träger (1),
- Vermessen des Trägers (1) durch ein Abfahren des Trägers (1) entlang einer Längsachse (2) mit der
Messvorrichtung (30) und Erfassen von einer Mehrzahl von Messpositionen (x, y, z, α, β, γ),
- Berechnen der Trägergeometrie anhand der Mehrzahl von Messpositionen (x, y, z, α, β, γ),
- wobei mindestens ein Sensor an der Messvorrichtung (30) vorgesehen ist, der die ordnungsgemäße Kontaktierung von Laufflächen (55) der Messvorrichtung (30) auf dem Träger (1) erfasst, und dass nur Messpositionen (x, y, z, α, β, γ) erfasst werden, wenn durch den mindestens einen Sensor die ordnungsgemäße Kontaktierung von Laufflächen (55) der Messvorrichtung (30) auf dem Träger (1) festgestellt ist.

2. Verfahren nach Anspruch 1,
**dadurch gekennzeichnet, dass** zur Berechnung der Trägergeometrie zusätzlich mindestens ein Parameter (A) verwendet wird, der für eine Trägerform des Trägers (1) charakteristisch ist.

3. Verfahren nach Anspruch 2,
**dadurch gekennzeichnet, dass** der mindestens eine Parameter (A) ein Durchmesser oder eine Profilform des Trägers (1) ist, und dass der Parameter (A) manuell erfasst wird.

4. Verfahren nach Anspruch 2 oder 3,
**dadurch gekennzeichnet, dass** der mindestens eine Parameter (A) ein Durchmesser oder eine Profilform ist, und dass der mindestens eine Parameter (A) mit mindestens zwei Messpositionen (x, y, z, α, β, γ) berechnet wird, wobei die Messvorrichtung (30) zwischen den mindestens zwei Messpositionen (x, y, z, α, β, γ) um einen Polarwinkel (ϕ) um die Längsachse (2) des Trägers (1) verschoben wird.

5. Verfahren nach einem der vorgenannten Ansprüche,
**dadurch gekennzeichnet, dass** die Messvorrichtung (30) mittels einer Längsführung (34) parallel zu der Längsachse (2) des Trägers (1) an dem Träger (1) geführt ist.

6. Verfahren nach einem der vorgenannten Ansprüche,
**dadurch gekennzeichnet, dass** die Messvorrichtung (30) von Hand geführt die Längsachse (2) des Trägers (1) abfährt, oder dass die Messvorrichtung (30) mechanisch angetrieben die Längsachse (2) des Trägers (1) abfährt.

7. Verfahren nach einem der vorgenannten Ansprüche,
**dadurch gekennzeichnet, dass** die Messpositionen (x, y, z, α, β, γ) zeitlich getriggert oder abstandsabhängig getriggert erfasst werden.

8. Verfahren nach einem der vorgenannten Ansprüche,
**dadurch gekennzeichnet, dass** die Messvorrichtung (30) durch mindestens ein Haltemittel (43) an dem Träger (1) gehalten wird.

9. Messsystem (10) zur Durchführung des Verfahrens zur Bestimmung einer Trägergeometrie eines Trägers aufweisend einen Lasertracker (20) und eine Messvorrichtung (30) mit einem Trackersteuerungssensor (22), wobei der Lasertracker (20) die Messpositionen (x, y, z, α β, γ) des Trackersteuerungssensors (22) erfasst und die Messvorrichtung (30) umfasst:
- eine Plattform (40) mit einer ersten Seite (41), einer zweiten Seite (42) und einer Längsachse (35),
- wobei auf der ersten Seite (41) eine Längsführung (34) angeordnet ist, die parallel zu der Längsachse (35) ausgebildet ist,
- wobei die Längsführung (34) in der Längsachse (35) in zwei parallelen und beanstandeten Ebenen jeweils mindestens zwei Laufflächen (55) aufweist, und
- wobei die Laufflächen (55) ausgebildet sind, die Messvorrichtung (30) in einer Ebene senkrecht zu einer Längsachse (35) an dem Träger (1) abzustützen,
- wobei auf der zweiten Seite (42) Befestigungsmittel (46) vorhanden sind, die eingerichtet sind, den Trackersteuerungssensor (22) auf der Plattform (40) zu befestigen, und
- wobei ein Sensor vorhanden ist, der eingerichtet ist, die ordnungsgemäße Kontaktierung der Laufflächen (55) der Messvorrichtung (30) auf dem Träger (1) zu erfassen und das Erfassen von Messpositionen zu kontrollieren, wodurch nur Messpositionen (x, y, z, α, β, γ) erfasst werden, wenn durch den mindestens einen Sensor die ordnungsgemäße Kontaktierung von Laufflächen (55) der Messvorrichtung (30) auf dem Träger (1) festgestellt ist.

10. Messsystem (10)) nach Anspruch 9,
**dadurch gekennzeichnet, dass** die Längsführung (34) einen ersten Haltebügel (51) und einen zweiten Haltebügel (52) umfasst, und dass der erste Haltebügel (51) und der zweite Haltebügel (52) jeweils einen zylinderförmigen Teilkreis einschließen.

11. Messsystem (10)) nach einem der Ansprüche 10,
**dadurch gekennzeichnet, dass** ein erstes und ein zweites Ende (53, 54) der Haltebügel (51, 52) in einem Winkel α = 90°±60° angeordnet sind.

12. Messsystem (10) nach Anspruch 11,
**dadurch gekennzeichnet, dass** das erstes und das zweites Ende (53, 54) der Haltebügel (51, 52) eine der Laufflächen (55) aufweisen.

13. Messsystem (10) nach einem der Ansprüche 9 bis 12, **dadurch gekennzeichnet, dass** die Laufflächen (55) jeweils eine Laufrolle (56) oder einen Gleiter umfassen.

14. Messsystem (10) nach einem der Ansprüche 9 bis 13,
**dadurch gekennzeichnet, dass** mindestens ein Haltemittel (43) vorhanden ist.

15. Messsystem (10) nach einem der Ansprüche 9 bis 14,
**dadurch gekennzeichnet, dass** mindestens ein Sensor vorhanden ist, und dass der Sensor eingerichtet ist, den Träger (1) auf der ersten Seite (41) der Plattform (40) zu erkennen.

16. Messsystem (10) nach einem der Ansprüche 14,
**dadurch gekennzeichnet, dass** das Haltemittel (43) mindestens einen Magneten (44) umfasst.

17. Verwendung eines Messsystems (10) gemäß Anspruch 9 bei dem Biegen von Trägern (1) oder Rohren.

## Claims

1. Method for measuring the beam geometry of a beam (1), in particular of a rail or of a pipe, by means of a measuring device (30) having a tracker control sensor (22) and by means of a laser tracker (20),
wherein the laser tracker (20) is arranged stationary and at a distance to the measuring device (30) and the laser tracker (20) is optically coupled to the tracker control sensor (22), **characterized by** the method steps:
- placing the measuring device (30) onto the beam (1),
- measuring the beam (1) by travelling along the beam (1) with the measuring device (30) along a longitudinal axis (2) and covering numerous measurement positions (x, y, z, α, β, γ),
- measuring the beam geometry based on the numerous measurement positions (x, y, z, α, β, γ),
- wherein at least one sensor is provided on the measuring device (30) which detects the proper contacting of the bearing surfaces (55) of the measuring device (30) on the beam (1), and in that measurement positions (x, y, z, α, β, y) are only covered after the proper contacting of the bearing surfaces (55) of the measuring device (30) on the beam (1) has been determined.

2. Method in accordance with claim 1,
**characterized in that**, in order to measure the beam geometry, at least one parameter (A), which is characteristic for a beam form of the beam (1), is additionally used.

3. Method in accordance with claim 2,
**characterized in that** the at least one parameter (A) is a diameter or a profile shape of the beam (1), and **in that** the parameter (A) is recorded manually.

4. Method in accordance with claim 2 or 3,
**characterized in that** the at least one parameter (A) is a diameter or a profile shape, and **in that** the at least one parameter (A) is calculated with at least two measurement positions (x, y, z, α, β, y), wherein the measuring device (30) is offset at a polar angle (ϕ) around the longitudinal axis (2) of the beam (1) between the at least two measurement positions (x, y, z, α, β, y).

5. Method in accordance with and of the preceding claims,
**characterized in that** the measuring device (30) is guided along the beam (1), parallel to the longitudinal axis (2) of the beam (1), by means of a longitudinal guide (34).

6. Method in accordance with any of the preceding claims,
**characterized in that** the measuring device (30) travels along the longitudinal axis (2) of the beam (1) guided by hand, or **in that** the measuring device (30) travels along the longitudinal axis (2) of the beam (1) driven mechanically.

7. Method in accordance with any of the preceding claims,
**characterized in that** the measurement positions (x, y, z, α, β, y) are covered chronologically triggered or distance-dependently triggered.

8. Method in accordance with any of the preceding claims,
**characterized in that** the measuring device (30) is retained on the beam (1) by means of at least one retention means (43).

9. Measurement system (10) for carrying out the method for determining a beam geometry of a beam, comprising a laser tracker (20) and a measuring device (30) with a tracker control sensor (22), wherein the laser tracker (20) detects the measurement positions (x, y, z, α, β, y) of the tracker control sensor (22) and the measuring device comprises:
- a platform (40) with a first side (41), a second side (42) and a longitudinal axis (35),
- wherein, on the first side (41), a longitudinal guide (34) is arranged which is implemented parallel to the longitudinal axis (35),
- wherein the longitudinal guide (34) comprises, in the longitudinal axis (35) and on each of two parallel and distantly disposed planes, at least two bearing surfaces (55), and
- wherein the bearing surfaces (55) are implemented to support the measuring device (30) on the beam (1) on a plane which is horizontal to a longitudinal axis (35),
- wherein, on the second side (42), attachment means (46) are provided which are implemented to secure the tracker control sensor (22) on the platform, and
- wherein a sensor is provided which is configured to detect the proper contacting of the bearing surfaces (55) of the measuring device (30) on the beam (1) and to control the covering of the measurement positions (x, y, z, α, β, y), whereby measurement positions (x, y, z, α, β, y) are only covered after at least one sensor has determined the proper contacting of the bearing surfaces (55) of the measuring device (30) on the beam (1).

10. Measurement system (10) in accordance with claim 9,
**characterized in that** the longitudinal guide (34) comprises a first retaining bracket (51) and a second retaining bracket (52), and **in that** both the first retaining bracket (51) and the second retaining bracket (52) encompass a cylinder-shaped partial circle.

11. Measurement system (10) in accordance with claim 10,
**characterized in that** a first and a second end (53, 54) of the retaining brackets (51, 52) are arranged at an angle of α = 90° ± 60°.

12. Measurement system (10) in accordance with claim 11,
**characterized in that** the first and a second ends (53, 54) of the retaining brackets (51, 52) comprise a bearing surface (55).

13. Measurement system (10) in accordance with any of claims 9 to 12, **characterized in that** each of the bearing surfaces (55) include a roller (56) or a slider.

14. Measurement system (10) in accordance with any of claims 9 to 13, **characterized in that** at least one retention means (43) is provided.

15. Measurement system (10) in accordance with any of claims 9 to 14, **characterized in that** at least one sensor is provided, and **in that** the sensor is configured to recognize the beam (1) on the first side (41) of the platform (40).

16. Measurement system (10) in accordance with any of claims 9 to 14, **characterized in that** the retention means (43) include a magnet (44).

17. Usage of a measurement system (10) in accordance with claim 9 during the bending of beams (1) or pipes.

## Revendications

1. Procédé pour faire le relevé de la géométrie d'un support (1), notamment d'un rail ou d'un tube, à l'aide d'un dispositif de mesure (30) comprenant un capteur de commande de traceur (22) et à l'aide d'un traceur laser (20),
le traceur laser (20) est installé écarté et fixe par rapport au dispositif de mesure (30), et le traceur laser (20) est couplé au capteur de commande de traceur (22) par une liaison optique,
procédé **caractérisé par** les étapes suivantes consistant à :
- installer le dispositif de mesure (30) sur le support (1),
- faire le relevé du support (1) en parcourant le support (1) selon un axe longitudinal (2) avec le dispositif de mesure (30) et capturant un ensemble de positions de mesures (x, y, z, α, β, γ),
- calculer la géométrie du support à l'aide de l'ensemble des positions de mesure (x, y, z, α, β, γ),
procédé dans lequel
au moins un capteur est prévu sur le dispositif de mesure (30) qui saisit la mise en contact correcte des surfaces de circulation (55) du dispositif de mesure (30) sur le support (1) et en ce que l'on ne saisit que les positions de mesure (x, y, z, α, β, y) si au moins un capteur a constaté le contact correct des surfaces de circulation (55) du dispositif de me-sure (30) sur le support (1).

2. Procédé selon la revendication 1,
**caractérisé en ce que**
pour calculer la géométrie du support, on utilise au moins un paramètre supplémentaire (A) qui est caractéristique d'une certaine forme du support (1).

3. Procédé selon la revendication 2,
**caractérisé en ce que**
au moins le paramètre (A) est le diamètre ou la forme du profil du support (1) et **en ce que** le paramètre (A) se saisit manuellement.

4. Procédé selon la revendication 2 ou 3,
**caractérisé en ce que**
au moins le paramètre (A) est un diamètre ou une forme de profil et au moins le para-mètre (A) se calcule avec au moins deux positions de mesure (x, y, z, α, β, y), le dispositif de mesure (30) étant déplacé entre au moins deux positions de mesure (x, y, z, α, β, y) d'un angle polaire (ϕ) autour de l'axe longitudinal (2) du support (1).

5. Procédé selon l'une des revendications précédentes,
**caractérisé en ce que**
le dispositif de mesure (30) est guidé sur le support (1) à l'aide d'un guidage longitudinal (34) parallèle à l'axe longitudinal (2) du support (1).

6. Procédé selon l'une des revendications précédentes,
**caractérisé en ce que**
le dispositif de mesure (30) est guidé à la main pour parcourir l'axe longitudinal (2) du support (1) et le dispositif de mesure (30) circule le long de l'axe longitudinal (2) du support (1) en étant entraîné mécaniquement.

7. Procédé selon l'une des revendications précédentes,
**caractérisé en ce que**
les positions de mesures (x, y, z, α, β, y) sont saisies en étant déclenchées dans le temps ou en fonction de la distance.

8. Procédé selon l'une des revendications précédentes,
**caractérisé en ce que**
le dispositif de mesure (30) est tenu sur le support (1) par au moins un moyen de maintien (43).

9. Système de mesure (10) pour la mise en œuvre du procédé de détermination de la géométrie d'un support comprenant un traceur laser (20) et un dispositif de mesure (30) comportant un capteur de commande (22) de traceur (20),
le traceur laser (20) saisissant les positions de mesure (x, y, z, α, β, y) du capteur de commande de traceur (22) et le dispositif de mesure (30) comprend :
- une plateforme (40) avec un premier côté (41), un second côté (42) et un axe longitudinal (35),
- le premier côté (41) comportant un guide longitudinal (34) parallèle à l'axe longitudinal (35),
- le guide longitudinal (34) ayant respectivement au moins deux surfaces de circulation 35 (55) selon l'axe longitudinal (35) dans deux plans parallèles et écartés, et
- les surfaces de circulation (55) étant réalisées pour soutenir le dispositif de mesure (30) dans un plan perpendiculaire à l'axe longitudinal (35) sur le support (1),
- le second côté (42) comportant des moyens de fixation (46) conçus pour fixer le capteur de commande de traceur (22) sur la plateforme (40), et
- un capteur est installé pour saisir la mise en contact correcte des surfaces de circulation (55) du dispositif de mesure (30) sur le support (1) et pour saisir les positions de mesure à contrôler, en ne saisissant les positions de mesure (x, y, z, α, β, y) que si au moins un capteur a constaté la mise en contact correcte des surfaces de circulation (55) du dispositif de mesure (30) sur le support (1).

10. Système de mesure (10) selon la revendication 9,
**caractérisé en ce que**
le guide longitudinal (34) comprend un premier arceau de maintien (51) et un second arceau de maintien (52), et
le premier arceau de maintien (51) et le second arceau de maintien (52) enveloppant respectivement une partie circulaire de forme cylindrique.

11. Système de mesure (10) selon la revendication 10,
**caractérisé en ce que**
une première et une seconde extrémités (53, 54) des arceaux de maintien (51, 52) font entre elles un angle α = 90°±60°.

12. Système de mesure (10) selon la revendication 11,
**caractérisé en ce que**
la première et la seconde extrémité (53, 54) des arceaux de maintien (51, 52) ont une surface de circulation (55).

13. Système de mesure (10) selon l'une des revendications 9 à 12,
**caractérisé en ce que**
les surfaces de circulation (55) ont respectivement un galet de circulation (56) ou un patin.

14. Système de mesure (10) selon l'une des revendications 9 à 13,
**caractérisé en ce qu'**il comporte
au moins un moyen de fixation (43).

15. Système de mesure (10) selon l'une des revendications 9 à 14,
**caractérisé en ce qu'**il comporte
au moins un capteur et ce capteur est installé pour reconnaître le support (1) sur le pre-mier côté (41) de la plateforme (40).

16. Système de mesure (10) selon la revendication 14,
**caractérisé en ce que**
le moyen de maintien (43) comprend au moins un aimant (44).

17. Application d'un système de mesure (10) selon la revendication 9,
pour le cintrage de supports (1) ou de tubes.
